Europäisches Patentamt

European Patent Office

Office européen des brevets

(19)

(11) Veröffentlichungsnummer: **0 181 674 B1**

(12) **EUROPÄISCHE PATENTSCHRIFT**

(45) Veröffentlichungstag der Patentschrift: 05.06.91

(51) Int. Cl.5 **G11B 15/675**

(21) Anmeldenummer: 85201812.6

(22) Anmeldetag: 08.11.85

(54) **Steuerungseinrichtung in einem Magnetbandkassettengerät.**

(30) Priorität: 15.11.84 DE 3441804

(43) Veröffentlichungstag der Anmeldung:
**21.05.86 Patentblatt 86/21**

(45) Bekanntmachung des Hinweises auf die
Patenterteilung:
**05.06.91 Patentblatt 91/23**

(84) Benannte Vertragsstaaten:
**DE FR GB IT**

(56) Entgegenhaltungen:
**EP-A- 0 072 587**
**EP-A- 0 121 283**
**DE-B- 2 926 440**

(73) Patentinhaber: **Philips Patentverwaltung
GmbH
Wendenstrasse 35 Postfach 10 51 49
W-2000 Hamburg 1(DE)DE**

Patentinhaber: **N.V. Philips' Gloeilampenfabrieken
Groenewoudseweg 1
NL-5621 BA Eindhoven(NL)FR GB IT**

(72) Erfinder: **Klös, Karl
Odenhäuserstrasse 4
W-6304 Ruttershausen(DE)**

(74) Vertreter: **Kupfermann, Fritz-Joachim,
Dipl.-Ing. et al
Philips Patentverwaltung GmbH Wendenstrasse 35 Postfach 10 51 49
W-2000 Hamburg 1(DE)**

## Beschreibung

Die Erfindung bezieht sich auf eine Steuerungseinrichtung in einem Magnetbandkassettengerät mit einer längsverschieblichen Steuerstange, die mit einem dem Einziehen bzw. Auswerfen der Kassette dienenden Hebel über einen Teil ihres Verschiebeweges zusammenarbeitet, wobei dieser Hebel mittels eines Schaltansatzes mit einem Schaltarm eines elektrischen Schalters zusammenwirkt, der am Anfang der Einziehbewegung in eine Einschaltstellung gebracht wird und den Motorantrieb für die Steuerstange einschaltet und im Verlaufe der Auswerfbewegung in einer Ausschaltstellung das Ausschalten des Motorantriebs ermöglicht.

Ein derartiges Magnetbandkassettengerät ist bekannt aus der DE-OS 33 15 822. Dabei wird ein Schaltorgan benutzt, das beim Eindrücken der Kassette mit der Hand über einen Transporthebel eingeschaltet wird und beim Auswerfen der Kassette nach Erreichen der Endstellung des Transporthebels wieder ausgeschaltet wird. Es muß beim Ausschalten des Antriebes sichergestellt werden, daß die Kassette weit genug ausgefahren wird, um mit der Hand bequem herausgezogen werden zu können. Der Motor des Antriebes dreht normalerweise auch nach dem Ausschalten noch ein wenig weiter durch, so daß unter normalen Bedingungen die Kassette weit genug ausgeworfen wird. Es gibt aber Extremfälle, in denen dies nicht der Fall ist. Dies gilt beispielsweise bei außerordentlich niedrigen Betriebstemperaturen oder bei zu niedriger Betriebsspannung. In diesen Fällen kann es passieren, daß der Auswerfpunkt zu weit innerhalb des Gerätes liegt und die Kassette deshalb nicht bequem erfaßt werden kann. Dieser Nachteil kann überwunden werden durch einen zusätzlichen Schalter. Eine derartige Maßnahme ist aber platzraubend und verlangt zusätzliche elektrische Verbindungen. Insgesamt ist diese Zusatzmaßnahme kostenaufwendig und weniger geeignet für kompakt gebaute Geräte.

Es ist Aufgabe der Erfindung, ein Magnetbandkassettengerät zu schaffen, bei dem mit einfachen Mitteln sichergestellt ist, daß die Kassette immer weit genug ausgeworfen wird, um sich bequem mit der Hand herausnehmen zu lassen.

Die gestellte Aufgabe ist erfindungsgemäß gelöst durch ein von der Steuerstange verstellbares, zeitlich begrenzt wirkendes Sperrglied, das im Verlauf der Auswerfbewegung der Kassette von der Steuerstange mittels einer Kulisse in einer das Ausschalten sperrenden Stellung positioniert wird, in der es vom Schaltansatz den Schaltarm des Schalters in der Einschaltstellung übernimmt, und im weiteren Verlauf gegen Ende der Auswerfbewegung der Steuerstange freigegeben wird, wodurch es vom Schaltarm des Schalters in die Ausschaltstellung bewegbar ist, so daß der Schalter den Motorantrieb bezüglich des Zeitpunktes der Freigabe des Schaltarms vom Schaltansatz verzögert abschaltet.

Durch das Einführen dieses den Schaltvorgang zeitlich verzögernden Sperrgliedes wird eine gewisse Verzögerungszeit und ein gewisser Verzögerungsweg eingeführt, die immer beide so lang bemessen sind, daß die Kassette ausreichend weit ausgeworfen wird. Es wird damit eine gewisse Hysteresis eingeschoben, durch die dafür gesorgt wird, daß der Motoreinschaltpunkt beim Einschieben der Kassette nicht gleichgesetzt ist mit dem Ausschaltpunkt beim Auswerfen. Der Ausschaltpunkt des Motors beim Auswerfen wird so weit verlegt, daß der Motor erst ausschalten kann, wenn die Kassette über den Einschaltpunkt hinein ausgefahren ist. Das Sperrglied wird vorzugsweise in Spritztechnik hergestellt sein, so daß es außerordentlich wirtschaftlich erstellbar ist.

Nach einer weiteren Ausgestaltung der Erfindung ist vorgesehen, daß das zeitlich begrenzt wirkende Sperrglied positioniert wird von einer Kulisse, die im Verlaufe der Auswerfbewegung abgetastet wird von einem Tastarm des Sperrgliedes und die gegen Ende der Auswerfbewegung den Tastarm derart leitet, daß sich der Tastarm aus der Positionierstellung in eine Freigabestellung bewegt, in der ein Schaltarm des Schalters vom Sperrglied freigegeben wird. Die Anordnung der Kulisse auf der Steuerstange gibt die Möglichkeit, das Verzögerungsglied auf einfache Weise anzusteuern, weil die Steuerstange mit ihrer Bewegung ein deutliches Indiz für die Länge des Auswurfweges gibt. Die Kulisse kann vorteilhaft auf die Steuerstange aufgespritzt sein, so daß sie sich billig und genau herstellen läßt.

Nach einer weiteren Ausgestaltung der Erfindung ist vorgesehen, daß die Kulisse eine Führungswand aufweist, die sich im Verlaufe der Auswerfbewegung längs des Tastarmes bewegt und einen zurückspringenden Versatz aufweist, der gegen Ende der Auswerfbewegung am Tastarm vorbeiläuft, wodurch dieser zwangsläufig in den Versatz hineinläuft, wobei die Positionierung aufgehoben wird, und daß am erneuten Anfang der Einziehbewegung der Tastarm über eine Führungsbahn zurückgeleitet wird zur Führungswand, von wo aus der Tastarm die Positionierung in der den Ausschaltzeitpunkt verzögernden Stellung wieder aufnimmt. Durch die Anordnung von Führungswand, Versatz und Führungsbahn ergibt sich für den Tastarm ein Rundweg, den er zwangsläufig durchlaufen muß. Nach jedem Auswerfen wird der Tastarm damit immer wieder in eine Ausgangsstellung zurückgeführt, aus der er beim Einziehen auf die Führungswand aufläuft.

Nach einer weiteren Ausgestaltung der Erfindung ist vorgesehen, daß der Tastarm über ein Kunststoff-Filmgelenk mit einer Buchse verbunden ist, die einen Positionieransatz aufweist, der mit dem Schaltarm des Schalters zusammenwirkt, und daß die Buchse um einen Lagerstift des Transporthebels drehbar ist, die den Schaltansatz trägt. Durch das Aufsetzen der Buchse auf die Welle des Hebels wird für die Anordnung des Verzögerungsgliedes praktisch kein zusätzlicher Raum und keine zusätzliche Achse für die Buchse benötigt.

Nach einer weiteren Ausgestaltung der Erfindung ist vorgesehen, daß an der Buchse eine Anschlagnase vorgesehen ist, die mit einem an dem Chassis befestigten Anschlag derart zusammenwirkt, daß der Tastarm beim Einlaufen in den Versatz an der Führungswand nur bis zum Einlaufbereich der Führungsbahn einlaufen kann. Nach einer weiteren Ausgestaltung der Erfindung ist vorgesehen, daß der Schaltarm unter dem Einfluß einer auf ihn wirkenden Feder gegen das Verzögerungsglied drückbar ist und der Tastarm bei Aufhebung der Positionierung dementsprechend in den Versatz hinein drückbar ist. Zum Bewegen des Verzögerungsgliedes wird also keine zusätzliche Feder benötigt. Als Feder genügt die Feder innerhalb des Schalters, die den Schaltarm in seine Ausschaltstellung drängt.

Nach einer weiteren Ausgestaltung der Erfindung ist vorgesehen, daß der Schaltansatz vom Anfang der Einziehbewegung bis zur Übernahme durch den Positionieransatz den Schaltarm in der Einschaltstellung hält und daß im Verlaufe der Auswerfbewegung der Positionieransatz in eine überdeckende Lage mit dem Schaltansatz fährt, in der der Schaltarm an beiden anliegt. Durch das Überdecken ist sichergestellt, daß der Schaltarm von dem Positionieransatz zuverlässig übergenommen wird, wenn sich der Schaltansatz mit dem Transporthebel weg bewegt.

Nach einer weiteren Ausgestaltung der Erfindung ist vorgesehen, daß der Transporthebel mittels eines Stiftes auf der Steuerstange in die Auswerfstellung drehbar ist, wobei sich der Schaltansatz vom Schaltarm weg bewegt, und der Positionieransatz mittels der Führungswand in der Positionierstellung am Schaltarm gehalten wird, bis der Tastarm eine gewisse Zeit nach dem Wegdrehen des Schaltansatzes sich in den Versatz hinein bewegt, wodurch die Federkraft des Schaltarmes mit dem Schaltarm das Sperrglied wegdrückt und der Motorantrieb abschaltet. Wenn die gegenseitige Positionierung von Stift und Versatz richtig gewählt sind, dann wird die Kassette immer ausreichend weit ausgeworfen.

Die Erfindung wird anhand des in der Zeichnung dargestellten Ausführungsbeispieles näher erläutert. Es zeigen:

Fig. 1 eine schaubildliche Darstellung eines Teiles eines Magnetbandkassettengerätes nach der Erfindung,

Fig. 2A eine schaubildliche vergrößerte Darstellung eines Rastmechanismus des Gerätes nach Fig. 1 in einer ersten Lage,

Fig. 2B den Rastmechanismus nach Fig. 2A in einer zweiten Lage,

Fig. 3 einige Teile des Gerätes nach Fig. 1, von der Tonkopfseite her gesehen, in einer ersten Bandlaufrichtung,

Fig. 4 einige Teile des Gerätes nach Fig. 1, von der Tonkopfseite her gesehen, in einer zu Fig. 3 entgegengesetzten Bandlaufrichtung,

Fig. 5 das Zusammenwirken einer Leitschlitzanordnung des Gerätes nach Fig. 1 mit Steuermitteln für die Umschaltung der Bandlaufrichtung und Kopfplatte in einer Explosionsdarstellung,

Fig. 6 die verschiedenen Lagen einer Steuerplatte mit einer mit ihr zusammenwirkenden Steuerstange zur Vorgabe einer Vorzugsbandlaufrichtung,

Fig. 7 eine schaubildliche Darstellung eines Teils der Vorrichtung zur Vorgabe einer Vorzugsbandlaufrichtung,

Fig. 8 eine schaubildliche Darstellung einer die Steuerstange umfassenden Steuervorrichtung des Gerätes nach den vorhergehenden Figuren mit weiteren schematisch dargestellten Einzelteilen des Gerätes,

Fig. 9 eine schaubildliche Darstellung eine Ein- und Ausschaltmechanismus des Gerätes nach Fig. 1,

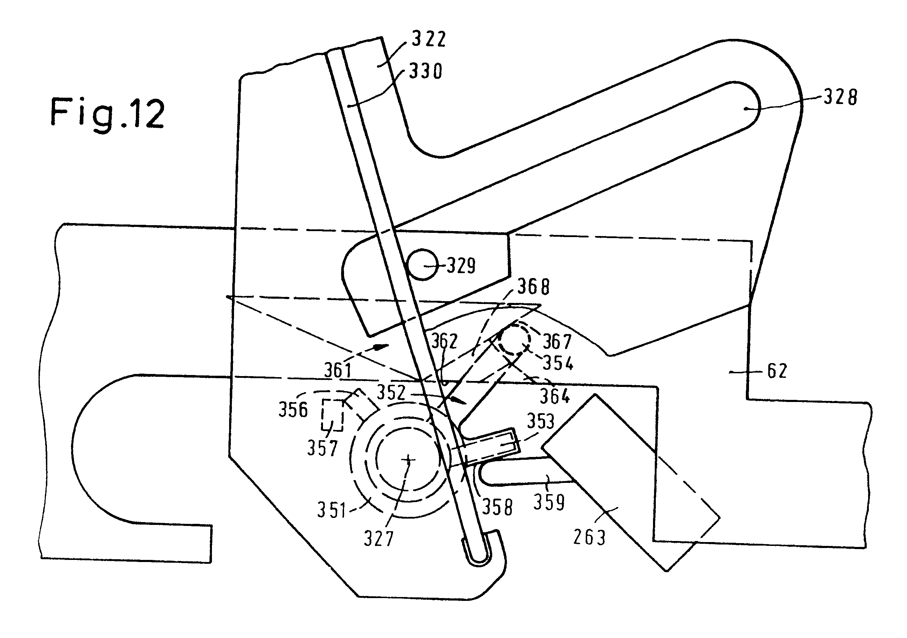

Fig. 10 bis 12 drei schematische Bilder mit verschiedenen Bewegungsstellungen des Ein- und Ausschaltmechanismus nach Fig. 9.

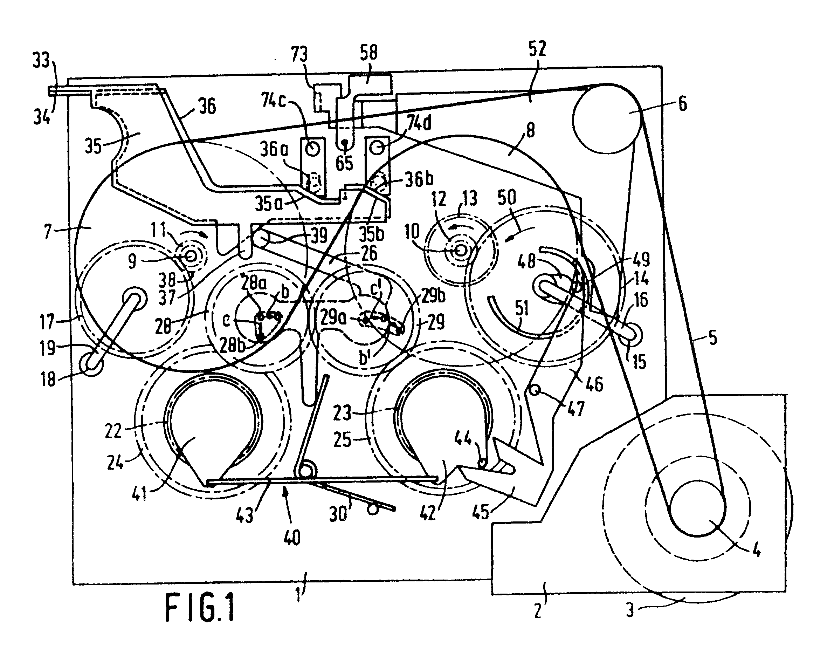

Das Magnetbandkassettengerät nach der Erfindung, wie in Fig. 1 dargestellt, weist ein Gestell 1 auf, das über eine Stütze 2 einen nur in einer Richtung umlaufenden Antriebsmotor 3 trägt. Das Abriebsritzel 4 des Motors 3 führt eine Peese 5, die über eine Umlenkrolle 6 über Schwungräder 7 und 8 derart geführt ist, daß die Schwungräder gegensinnig drehen. Die Schwungräder 7 und 8 sind im Gestell 1 gelagert. Die Schwungscheibe 7 ist fest verbunden mit einer Tonwelle 9, und die Schwungscheibe 8 ist fest verbunden mit einer Tonwelle 10. Weiterhin sind die Schwungscheibe 7 mit einem Zahnrad 11 und die Schwungscheibe 8 mit einem Zahnrad 12 verbunden. Über eine Rutschkupplung ist koaxial zu dem Zahnrad 12 ein weiteres Zahnrad 13 auf der Schwungscheibe 8 drehbar angeordnet. Mit dem Zahnrad 12 auf der Schwungscheibe 8 ist ständig kämmend ein als Zahnrad ausgebildetes Schaltrad 14 in Eingriff. Dieses Zahnrad 14 ist schwenkbar um eine Achse 15. Die Achse 15 trägt einen in Fig. 1 schematisch dargestellten Schwenkarm 16, auf dem drehbar das Schaltrad 14 gelagert ist. In ähnlicher Weise kämmt mit dem Zahnrad 11 ständig ein Zahnrad 17. Dieses Zahnrad 17 ist drehbar um eine Schwenkachse 18 mittels eines schematisch dargestellten Schwenkarmes 19.

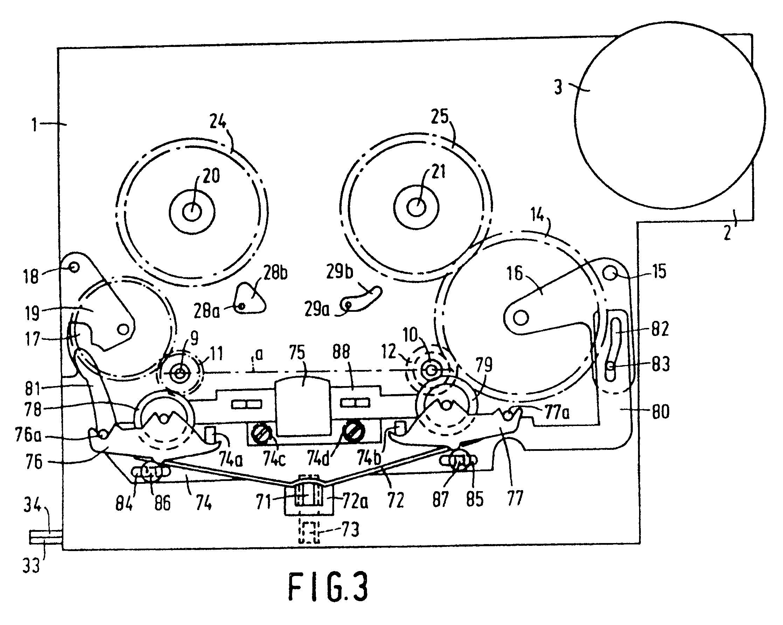

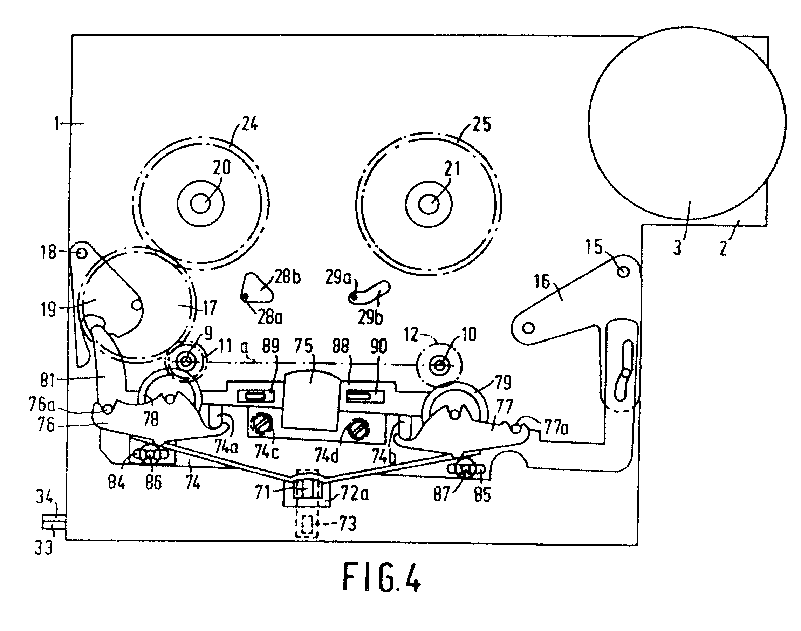

Wie auch in Fig. 3 und 4 dargestellt, sind drehbar im Gestell 1 Wickeldorne 20 und 21 gelagert. Diese Wickeldorne 20 und 21 sind fest verbunden mit Schnellspulrädern 22, 23. Über Rutschkupplungen sind mit den Wickeldornen 20, 21 Spielräder 24, 25 verbunden.

In Fig. 3 ist dargestellt, wie das Spielrad 25 über das Schaltrad 14 von dem Zahnrad 12 angetrieben wird. In Fig. 4 ist auf ähnliche Weise zu sehen, wie das Spielrad 24 über das Zahnrad 17 vom Zahnrad 1 angetrieben wird.

Ein Bügel 26, der verschiebbar im Gestell 1 gelagert ist, trägt nebeneinander zwei Zahnräder 28, 29 (siehe Fig. 1). Eine Feder 30 drückt den Bügel 26 immer in eine in Fig. 1 dargestellte Ausgangsposition.

Der Bügel 26 trägt zwei Stifte 28a und 29a, die in einem dreieckigen Loch 28b bzw. einem Schlitz 29b verschiebbar sind im Gestell 1.

Zum schnellen Vor- und Rücklauf sind zwei nebeneinander angeordnete, längsverschiebliche Bedienungsstangen 33 und 34 vorgesehen, die mit Schiebern 35, 36 verbunden sind. Diese Schieber 35 und 36 wirken auf den Bügel 26 ein. Dazu ist der Schieber 35 mit einem Ansatz 37 versehen; der Schieber 36 trägt entsprechend eine Auflauffläche 38. Der Ansatz 37 und die Auflauffläche 38 arbeiten auf einen Stift 39 des Bügels 26. Weiter sind die Schieber 35, 36 mit Auflaufflächen 35a, 35b bzw. 36a, 36b versehen, die auf Stifte 74c, 74d einer Kopfplatte 74 arbeiten können (siehe auf Fig. 3, 4).

Wenn durch Eindrücken der Bedienungsstange 33 der Ansatz 37 gegen den Stift 39 des Bügels 26 drückt, kommt erst das Zahnrad 29 in Eingriff mit dem Zahnrad 13. Dabei macht der Stift 28a eine Bewegung in Richtung des Pfeiles b und der Stift 29a eine Bewegung in Richtung des Pfeiles c'. Bei weiterer Bewegung fährt der Stift 29a weiter in Richtung des Pfeiles b' und kommt das Zahnrad 29 auch in Eingriff mit dem Zahnrad 23. Das Magnetband wird jetzt mit dem Wickeldorn 21 schnell aufgewickelt. Wird die andere Bedienungsstange 34 eingedrückt, dann wirkt die Auflauffläche 38 auf den Stift 39 des Bügels 26 ein, wodurch der Stift 28a in Richtung des Pfeiles c und der Stift 29a in Richtung des Pfeiles c' fährt, womit das Zahnrad 29 mit dem Zahnrad 13 und das Zahnrad 28 mit dem Zahnrad 22 in Eingriff kommt. Dadurch wird der andere Wickeldorn 21 zum Schnellspulen angetrieben.

Wenn die Kopfplatte 74 in eine Spielstellung gelangt ist, nehmen die Stifte 74c, 74d eine der gestrichelten Lagen in Fig. 1 ein. Die Lagen stimmen überein mit den Lagen gemäß Fig. 3 bzw. Fig. 4. Das Eindrücken der Bedienungsstange 33 bzw. 34 hat jetzt zur Folge, daß über die Auflauffläche 35a, 35b bzw. 36a, 36b die Stifte 74c, 74d und damit die Kopfplatte 74 nach links geschoben werden, so daß ein Tonkopf 75 und Andruckrollen 78, 79 von dem Magnetband abgehoben werden.

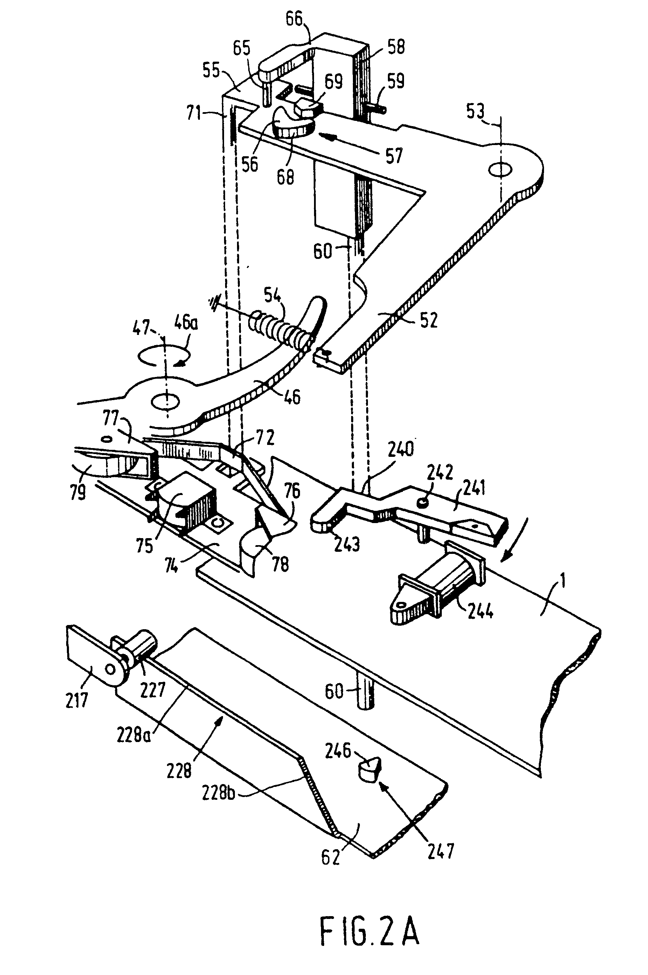

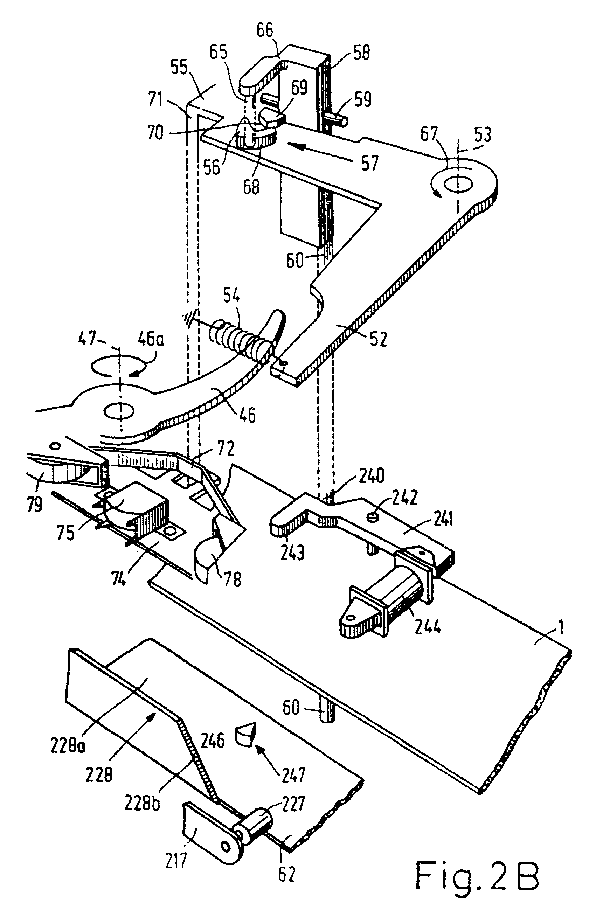

Ein Detektionsorgan 40, bestehend aus zwei Scheiben 41, 42 und einer Verbindungsstange 43, ist über Rutschkupplungen mit den Wickeldornen 20, 21 verbunden. Auf der Scheibe 42 ist ein Stift 44 angeordnet, der innerhalb einer Schaltgabel 45 liegt. Die Schaltgabel 45 ist an einem Schaltelement 46 angeordnet, das um ein Lager 47 drehbar ist (vergl. auch Fig. 2A und 2B). Das Schaltrad 14 trägt in seiner Mitte erhaben vorstehend einen ein wenig ellipsenförmigen Nocken 48. Das Schaltelement 46 greift über das Schaltrad 14 und trägt einen Stift 49, der bei nach innen geschwenktem Schaltelement 46 um den Nocken 48 herumfahren kann bei Drehung des Schaltrades in Richtung eines Pfeiles 50. Um den Nocken 48 herum erstreckt sich in einem größeren Abstand eine erhaben aus dem Schaltrad 14 heraustehende, spiralförmige Steuerkurve 51. Auch diese Steuerkurve 51 kann mit dem Stift 49 an dem Schaltelement 46 zusammenwirken, und zwar immer dann, wenn das Detektionsorgan den Bandstillstand feststellt. In diesem Fall drückt der Stift 44 nicht mehr gegen die Schaltgabel 45, wodurch der Stift 49 am Schaltelement 46 nicht mehr nach innen in Richtung auf den Nocken 48 belastet wird, sondern stehen bleibt und bei fortgehender Drehung des Schaltrades 14 in Richtung des Pfeiles 50 auf die Außenseite der Steuerkurve 51 gelangt. Weil die Steuerkurve 51 spiralförmig ist, wird das Schaltelement 46 im Uhrzeigersinn (Pfeil 46a in Fig. 2A, 2B um sein Lager 47 verschwenkt, wodurch das Schaltelement 46 gegen ein Verbindungselement 53 gedrückt wird.

Das Verbindungselement 42 ist ein doppelarmiger Hebel, der um ein Lager 53 schwenkbar ist. Wie aus den schaubildlichen Darstellungen in Fig. 2A und 2B zu erkennen ist, ist das Verbindungselement 52 aufgrund der Wirkung einer Feder 54 im Uhrzeigersinn federbelastet. Damit spannt die Bewegung des Schaltelementes 46 die Feder 54.

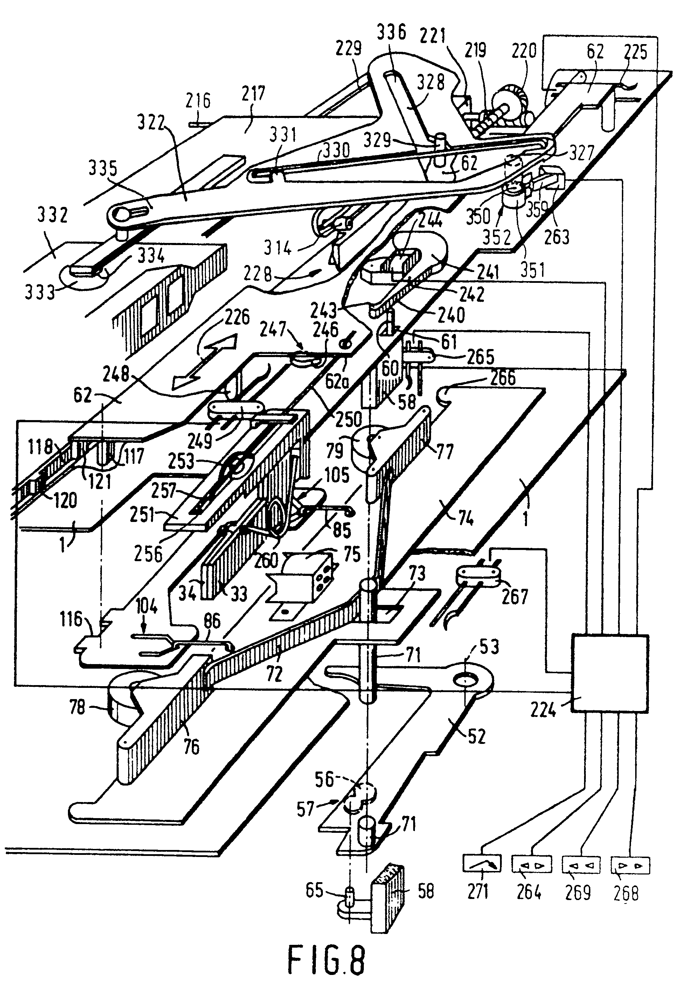

Der von dem Angriffspunkt des Schaltelementes 46 abgewandte Hebelarm 55 des Verbindungselementes 52 trägt eine Herzkurve 56, die zu einem Rastmechanismus 57 gehört. Zu dem Rastmechanismus 57 gehört auch ein Rasthebel 58, der um eine Achse 59 verschwenkbar ist. Die Achse 59 liegt parallel zu der Oberfläche des Gestells 1 und zu einer gedachten Verbindungslinie a zwischen den Tonwellen 9 und 10. Der Rasthebel 58 trägt auf der zur Herzkurve 56 gerichteten Seite einen Führungsstift 60, der durch ein Loch 61 im Chassis 1 hindurchgreift. Die Verstellung des Rasthebels um die Achse 59 wird später in Verbindung mit Fig. 8 erläutert.

Der Rasthebel 58 trägt einen Raststift 65, der in die Herzkurve 56 einfahrbar ist und die Herzkurve umfahren kann. Die Umfahrbarkeit wird z. B. über ein Filmgelenk 66 herbeigeführt. In Fig. 2A liegt der Stift 65 oberhalb der Herzkurve 56. In Fig. 2B ist der Stift 65 in den Bereich der Herzkurve 56 hineingefahren. Damit kann der Stift 65 mit der Herzkurve 56 zusammenwirken, wenn das Schaltelement 46 das Verbindungselement 52, wie in der Darstellung nach Fig. 2B, entgegen dem Uhrzeigersinn in Richtung eines Pfeiles 67 verschwenkt. Bei diesem Verschwenken ist der Stift 65 an einer Seitenwand 68 der Herzkurve 56 entlang gelaufen. Ein Führungsnocken 69 sorgt dafür, daß der Stift 65 in eine Mulde 70 der Herzkurve 56 einfällt.

Am Hebelarm 55 ist ein Nocken 71 angeordnet. Dieser Nocken 71 wirkt, wie sich aus den Fig. 3 und 4 ergibt, mit einer Blattfeder 72 zusammen und erstreckt sich durch einen Längsschlitz 23 im Gestell 1 hindurch. Die Blattfeder 72 drückt mit ihren freien Enden gegen Halterungen 76, 77, die auf der Kopfplatte 74 gelagert sind. Diese Kopfplatte 74 trägt in ihrer Mitte den Tonkopf 75 und beiderseits des Tonkopfes 75 die Halterungen 76, 77, in denen die Andruckrollen 78, 79 gelagert sind. Die Halterungen werden gegen Anschläge 74a, 74b der Kopfplatte 74 gedrückt.

Die Kopfplatte 74 hat abgewinkelte Enden 80, 81. Das abgewinkelte Ende 80 weist einen Schlitz 82 auf, in dem ein Stift 83 verschiebbar ist, der auf dem Schwenkarm 16 befestigt ist. Dadurch ist in der Stellung nach Fig. 3 der Schwenkarm 16 derart um die Achse 15 verschwenkt, daß das Schaltrad 14 mit dem Spielrad 25 und dem Zahnrad 12 kämmt. Dementsprechend ist in Fig. 4 dargestellt, daß das abgewinkelte Ende 81 der Kopfplatte 74 den Schwenkarm 19 um die Schwenkachse 18 geschwenkt hat, wodurch das Zahnrad 17 mit dem Spielrad 24 und dem Zahnrad 11 kämmt. Dementsprechend ist in der Stellung nach Fig. 3 die Druckrolle 79 gegen die Tonwelle 10 gedrückt, während in der Stellung nach Fig. 4 die Andruckrolle 78 gegen die Tonwelle 9 gedrückt ist.

In der Kopfplatte 74 sind parallel zu der Verbindungslinie a zwischen den Tonwellen 9, 10 Längsschlitze 84, 85 angeordnet, in denen Leitstifte 86, 87 verschiebbar sind.

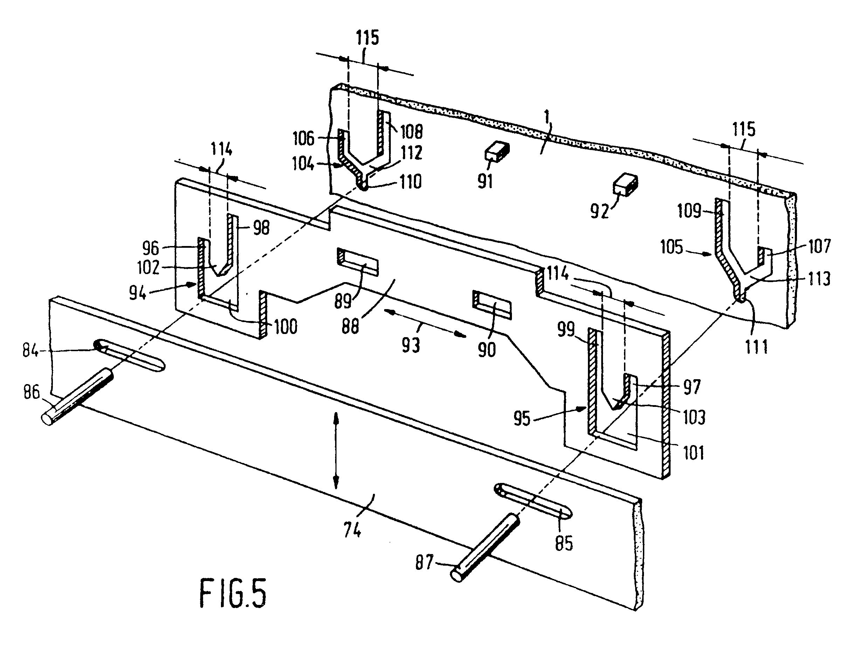

Fig. 5 zeigt anhand der Explosionsansicht in der Kopfplatte 74 geführte Leitstifte 86, 87, die in den Längsschlitzen 84, 85 geführt sind. Die Leitstifte sind damit parallel zu der Verbindungslinie a zwischen den Tonwellen verschiebbar. Die Halterung der Leitstifte 86, 87 an der Kopfplatte 74 ist in den Zeichnungen nicht näher dargestellt. Bei einer einfachen Ausführungsform sind die Leitstifte wie die Stifte von Reißnägeln an einer kappenförmigen Platte befestigt. Es ist aber ebensogut auch möglich, die Leitstifte an den freien Enden von federnden Zungen anzuordnen, die an der Kopfplatte 74 befestigt sind.

Zwischen der Kopfplatte 74 und der Chassisplatte an der Oberseite des Gestells 1 ist eine als Steuermittel dienende Steuerplatte 88 angeordnet. Diese Steuerplatte 88 ist mit Längsschlitzen 89, 90 versehen, durch die Führungsnocken 91, 92 der Chassisplatte hindurchgreifen. Dadurch ist die Steuerplatte 88 parallel zu der gedachten Verbindungslinie zwischen den Tonwellen 9, 10 verschiebbar. Die Verschiebbarkeit ist in Fig. 5 durch einen Doppelpfeil 93 angegeben.

Die Steuerplatte 88 ist an beiden Enden mit U-förmigen Schlitzen 94, 95 versehen. Von den U-förmigen Schlitzen 94 und 95 ist jeweils ein Schenkel 96, 97 kürzer und ein Schenkel 98, 99 länger ausgebildet. Die kürzeren Schenkel sind voneinander weg angeordnet und die längeren Schenkel dementsprechend aufeinander zu. Die Verbindungsbasis 100 und 101 zwischen den kürzeren und längeren Schenkeln ist stark verbreitert ausgebildet. Zwischen den längeren und kürzeren Schenkeln sind Materialzungen 102 und 103 ausgebildet, die an ihren zur Basis 100, 101 gerichteten Enden angespritzt sind.

In der Chassisplatte des Gestells 1 sind als Leitschlitzanordnungen dienende gabelförmige Leitschlitze 104 und 105 angeordnet mit zwei den Gabelzinken entsprechenden Schenkeln, von denen jeweils einer 106, 107 kürzer als der andere 108, 109 ausgebildet ist. Am Gabelschaft ist ein mittiger Einlaufschlitz 110, 111 vorgesehen, der sich an den trichterförmigen Gabelfuß 112, 113 anschließt. Der gegenseitige Abstand 114 der Schenkel der U-förmigen Leitschlitze 94, 95 in der Steuerplatte 88 ist geringer als der gegenseitige Abstand 115 der Schenkel der gabelförmigen Leitschlitze 104, 105.

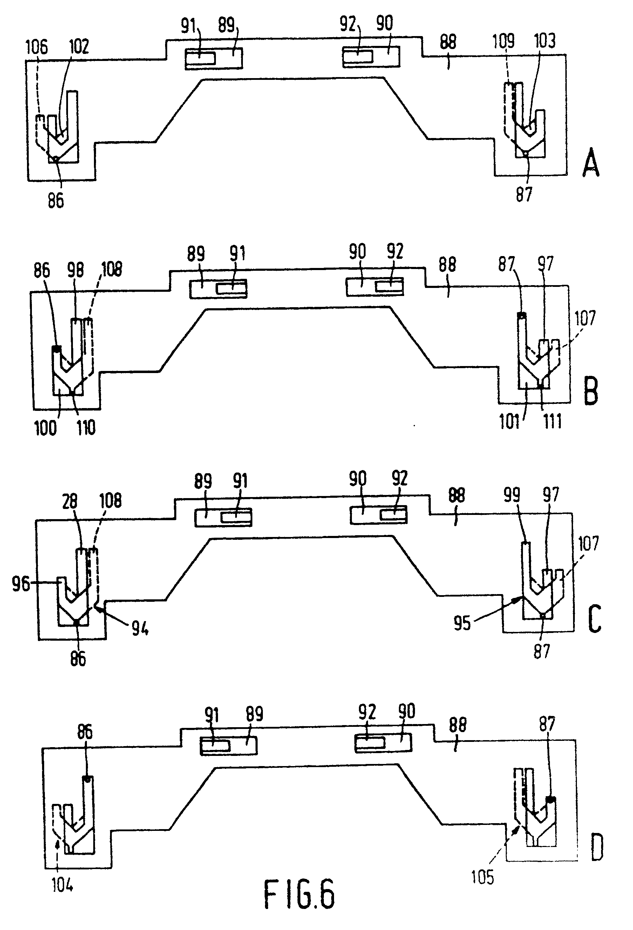

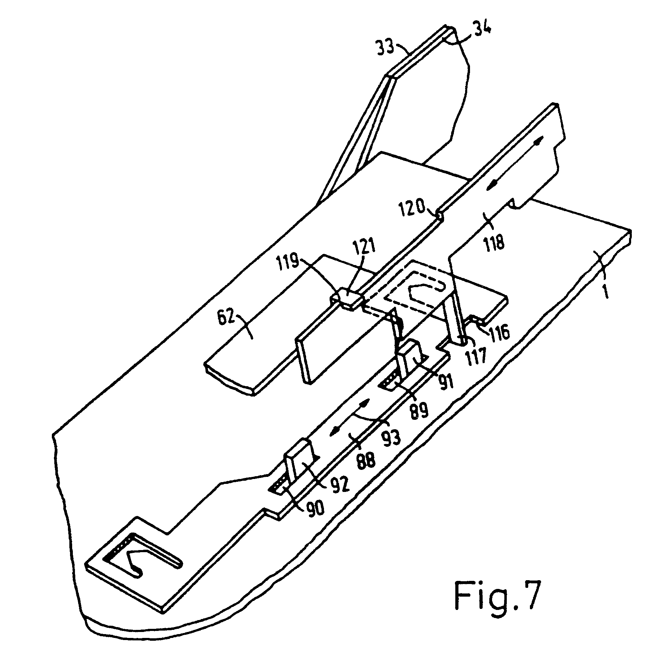

Fig. 7 zeigt anhand einer schaubildlichen Darstellung auf der Chassisplatte des Gestells 1 die Steuerplatte 88. Die Steuerplatte 88 ist mit einem Anschlag 116 versehen, gegen den eine Nase 117 eines Zwischenschiebers 118 stoßen kann, der parallel zu der gedachten Verbindungslinie a zwischen den Tonwellen 9 und 10 verschiebbar ist (Fig. 4 und 5). Der Zwischenschieber 118 ist mit zwei Anschlägen 119, 120 versehen, zwischen die ein Mitnehmer 121 einer noch in Verbindung mit Fig. 8 zu beschreibenden Steuerstange 62 drücken kann. Wenn die Stange 62 nach rechts für das Auswerfen einer Kassette bewegt wurde, dann hat sie den Zwischenschieber 118 nach rechts mitgenommen, weil der Mitnehmer 121 gegen den Anschlag 120 gestoßen ist. Dadurch ist die Nase 117 gegen den Anschlag 116 gestoßen. Die Steuerplatte 88 ist damit in Richtung des Doppelpfeiles 93 nach Fig. 7 nach rechts verschoben worden und in einer Vorzugslage nach Fig. 6C festgelegt. Wird die Stange 62 demgegenüber nach links bewegt, dann stößt der Mitnehmer 121 gegen den Anschlag 119. Dadurch ist die Nase 117 von dem Anschlag 116 abgerückt und ist die Steuerplatte 88 frei beweglich im Rahmen des zuvor beschriebenen Bewegungsablaufes.

Zu dem in Fig. 8 dargestellten Servomechanismus gehört die Steuerstange 62, die seitlich eines Kassettenliftes 217 in Längsrichtung 226 im Gestell 1 verschieblich ist. Die Längsrichtung ist die Einzieh- und Auswurfrichtung einer Kassette 332. Die Stange 62 wird verschoben mit Hilfe einer Gewindespindel 219. Diese Gewindespindel wird über ein Schneckengetriebe 220 angetrieben von einem reversierbaren Servomotor 221; er wird gesteuert von einer Steuerschaltung 224 nach Art eines Mikroprozessors. Ein Schalter 225 auf dem Gestell 1 begrenzt nach einer Richtung die Schiebebewegung der Stange 62. Der Schalter 225 ist von der Schaltvorrichtung 224 als Endstellungsmarkierung der Stange 62 in Richtung des Doppelpfeiles 226 erkennbar, an der alle Steuerstangenhübe referrieren.

Der um eine Achse 216 schwenkbare Lift 217 ist mit Hilfe einer Rolle 314 höhengesteuert geführt an einer Doppelkontur 228 der Stange 62.

In Fig. 8 ist die Doppelkontur 228 nur schemenhaft dargestellt, ebenso wie die Rolle 314. Ein Transporthebel 322 ist um einen Lagerstift 327 verschwenkbar. Im Hebel 322 ist eine Kulisse 328 vorgesehen, in die ein Stift 329 der Stange 62 eingreift. Der Stift 329 kann in der Kulisse 328 entlangfahren und dabei den Hebel 322 verschwenken. Quer über die Kulisse 328 erstreckt sich eine Drahtfeder 330, die an ihren Enden 331 eingespannt ist.

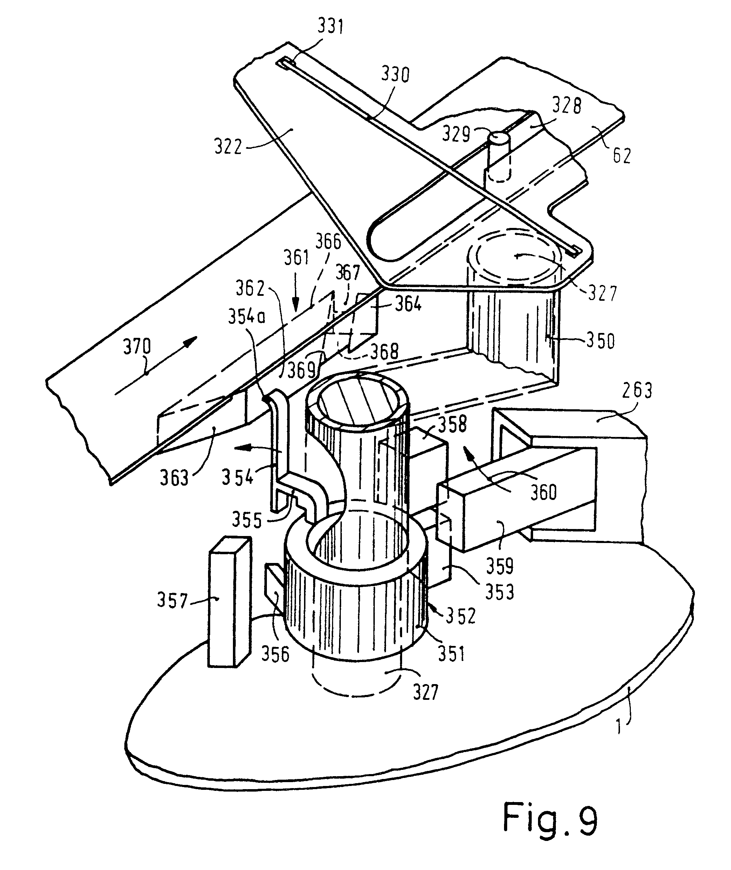

Wie in Fig. 9 dargestellt ist, liegt koaxial zum Lagerstift 327 eine Hohlwelle 350, die mit dem Transporthebel 322 fest verbunden ist und mit der der Transporthebel 322 um die Drehachse 327 schwenken kann. Auf der Hohlwelle 350 sitzt wiederum eine Buchse 351. Die Buchse 351 ist Bestandteil eines Verzögerungsgliedes 352. An der Buchse 351 sind ein Positionieransatz 353, ein Tastarm 354 und eine Anschlagnase 356 vorgesehen. Die Anschlagnase 354 wirkt mit einem Anschlag 357 an dem Chassis 1 zusammen.

An der Welle 350 ist ein Schaltansatz 358 angeordnet, der sich bei der Funktionsdarstellung nach Fig. 9 mit dem Positionieransatz 353 überdeckt. Vor beiden liegt ein Schaltarm 359 des Schalters 263. Mit Hilfe einer nicht dargestellten Feder ist der Schaltarm in Richtung eines Pfeiles 360 in Richtung auf die Ansätze 353 und 358 drückbar.

An der Steuerstange 62 befindet sich eine Kulisse 361. Diese Kulisse sitzt im wesentlichen unterhalb der Steuerstange 62 und ist an dieser durch Anspritzen befestigt. An der Seite des Tastarmes 354 ist an der Kulisse 361 eine Führungswand 362 vorgesehen. Diese Führungswand 362 wird vom freien Ende 354a des Tastarmes 354 abgetastet. Unterhalb der Steuerstange 62 schließt sich vor der Führungswand 362 an diese eine schräge Auflauffläche 363 an. Auf der dem Übergang zwischen der Fläche 363 und der Wand 362 gegenüberliegenden Kante der Führungswand 362 ist ein Versatz 364 in Form einer zurücklaufenden Fläche vorgesehen. Zwischen der Führungswand 362 und einer ihr gegenüberliegenden Wand 366 befindet sich ein Einlaufbereich 367 für den Tastarm 354. An den Einlaufbereich 367 schließt sich eine schräge Führungsbahn 368 an, die im Bereich eines Ausschnittes 369 an der Führungswand 362 mündet.

Mittels des Kassettenliftes 217 kann eine Kassette 332 eingezogen werden. Die Kassette 332 weist ein Wickeldornloch 333 auf, in das ein Mitnehmer 334 eingreift. Der Mitnehmer ist an einem Arm 335 des Hebels 322 drehbar gelagert.

Der Rasthebel 58 greift mit seinem Stift 60 durch das Loch 61 im Chassis 1 und liegt an einer Kante 240 an dem Riegelhebel 241. Der Riegelhebel 241 ist schwenkbar um eine Achse 242. Der Rasthebel 58 ist durch das Verbindungselement mit Feder 54 bestrebt, den Riegelhebel 241 von einem Riegelmagneten 244 wegzuschwenken. Eine Nase 243 am Riegelhebel 241 kann auf eine Kulisse 246 an der Stange 62 auflaufen. Der Riegelmagnet 244 ist mit der Steuerschaltung 224 elektrisch verbunden.

Die Kulisse 246 gehört zu einer Nase 247, die auf die Stange 62 aufgespritzt ist. Beim Verschieben der Stange 62 kann die Kulisse 246 auf die Nase 243 des Riegelhebels 241 auflaufen und den Riegelhebel dabei so verschieben, daß dieser sich an den Riegelmagneten 244 anlegt. Ein einstellbarer Nocken 248 arbeitet gleichzeitig mit einem Spiel- und Umkehrschalter 249 zusammen. Wenn die Nase 248 an dem Schalter 249 vorbei läuft, dann wird dieser normalerweise geschlossene Schalter kurz geöffnet und wieder geschlossen.

Nahe einem Längsende 62a der Stange 62 greift ein Kommandoglied 250 in Form einer Verbindungsstange an. Die Verbindungsstange ist in ein Loch der Stange 62 mit einer Abbiegung gelenkig eingehängt. Die Verbindungsstange 250 reicht bis zu einem Kommandoblock 251. In diesem Kommandoblock sind Kommandobahnen vorgesehen, in die ein abgebogenes Ende der Verbindungsstange 250 in Form eines Kommandostiftes 257 eingreifen kann.

Die Funktionsweise der Vorrichtung läßt sich wie folgt beschreiben. In der in Fig. 8 dargestellten Stellung hat der Mitnehmer 334 das Wickeldornloch 333 der von Hand eingeschobenen Kassette erfaßt. In dieser eingerasteten Position steht die Kassette 332 etwa noch 30 mm aus dem Gerät heraus. Beim weiteren Eindrücken der Kassette 332 spannt sich die Feder 330. Durch das Eindrücken der Kassette wird der Hebel 322 im Uhrzeigersinn und der Schaltansatz 359 entgegen der Richtung des Pfeiles 360 in eine Einschaltstellung verschwenkt. Der Schalter 263 wird geschlossen, und die Steuerstange 62 wird auf später noch beschriebene Weise durch das Ingangsetzen des Antriebsmotors 221 in Richtung des Pfeiles 370 nach Fig. 8 eingezogen. Der Stift 329 fährt nur in der Kulisse 328 in Richtung auf das Kulissenende und gibt dabei die Feder 330 frei. Die Feder 330 ist damit entlastet, und der Hebel 322 wird von keiner Zugfeder mehr beansprucht. Auf die Drehachse 327 wird damit keine belastende seitliche Verstellkraft ausgeübt.

Durch das Schließen des Schalters 263 ist auch der Mikroprozessor 224 elektrisch angeschlossen. Die Stange 62 wird in Fig. 8 nach rechts in Richtung des Pfeiles 370 verschoben und läuft bis zu dem Reset-Schalter 225 nach rechts weiter.

Das Schließen des Reset-Schalters 225 hat zur Folge, daß der Mikroprozessor 224 in eine Ausgangslage geschaltet wird. Dies hat zur Folge, daß der Servomotor 221 seine Drehrichtung umkehrt und damit die Servostange 62 nach links verschiebt. Dabei läuft der Nocken 248 an dem Spiel-Umkehr-Schalter 249 vorbei, wobei dieser geöffnet wird, und der Servomotor schaltet ab, so daß die Steuerstange stehen bleibt. Der Laufwerksmotor 3 läuft jetzt an. Die Kulisse 246 ist dabei zwar auf die Nase 243 gestoßen, jedoch der Riegelhebel 241 hat sich nicht an den Riegelmagneten 244 angelegt, weil der Magnet noch nicht von der Schaltung 224 erregt ist. Dadurch ist der Stift 65 nicht in den Rastmechanismus 57 eingefahren und nicht verrastet.

Weil der Laufwerksmotor 3 angelaufen ist, drehen sich auch die Schwungscheiben 7 und 8, und zwar in gegensinniger Richtung. Gleichzeitig drehen sich die Zahnräder 11 und 12 und die mit ihnen kämmenden Zahnräder 14 und 15. Der Rasthebel 58 ist aus der Lage nach Fig. 2A in die Lage nach Fig. 2B gefahren, und der Raststift 65 kommt in den Wirkbereich mit der Herzkurve 56 nach Fig. 2B.

Weil die Zahnräder 14 und 17 nicht in Eingriff sind mit den Zahnrädern 24 und 25, drehen die beiden Wickeldorne 20 und 21 nicht mit. Die Scheiben 41 und 42 sind über ihre separaten Reibungskupplungen mit den Wickeldornen 20, 21 verbunden und stehen damit auch still. Da beim Eindringen der Kassete ein Drehmoment auf das Schaltelement 46 fehlt, weil die Bandwickel nicht umlaufen und das Band still steht, bleibt das Schaltelement 46 in der in Fig. 1 dargestellten Stellung stehen und kommt damit mit dem Stift 49 auf die Außenseite der Steuerkurve 41. Das Schaltelement 46 macht nun eine Bewegung im Uhrzeigersinn gemäß Pfeil 46a (Fig. 2A) und schwenkt das Verbindungselement 52 entgegen dem Uhrzeigersinn (Pfeil 67). Weil der Rasthebel 58 geschwenkt ist und der Stift 65 der Herzkurve 56 im Wirkbereich ist, umläuft der Stift 65 nun die Wand 68 der Herzkurve 56 und fällt in die Mulde 70 ein. Damit ist das Verbindungselement in einer eingeschwenkten Stellung eingerastet (siehe Fig. 2B).

Durch das Schwenken des Verbindungselementes 52 entgegen dem Uhrzeigersinn in Richtung des Pfeiles 67 hat sich der Nocken 71 nach innen bewegt und gegen die Blattfeder 72 gedrückt. Die Blattfeder drückt ihrerseits über die Halterungen 76 und 77 gegen die Kopfplatte 74 und versucht, sie in Richtung auf die Tonwellen 9, 10 zu schieben. Nun kommt die Wirkung der Steuerplatte 88 zur Geltung.

Vor dem Einschwenken des Nockens 71 war die Kopfplatte 74 von den Tonwellen weggefahren. Die Leitstifte 86, 87 waren dadurch in die Einlaufschlitze 110 und 111 eingelaufen (vergl. Fig. 5). Die Steuerplatte 88 hat nach dem Auswerfen der vorhergehenden Kassette, wie schon in Verbindung mit Fig. 7 beschrieben, die aus Fig. 6C zu ersehende Stellung. Beim Vorfahren der Kopfplatte 74 in Richtung auf die Tonwellen 9, 10 fahren die Leitstifte 86, 87 nach vorn und laufen auf der rechten Seite der Zungen 102, 103 auf und zugleich in die rechten Schenkel 107 und 108 der gabelförmigen Leitschlitze 104, 105. Bei dem Einfahren der Leitstifte 86, 87 in die Schenkel 107 und 108 nehmen die Leitstifte 86, 87 die Steuerplatte 88 nach rechts mit, so daß sich nunmehr die Schenkel 98, 108 und 97, 107 überdecken. Der rechte Leitstift 87 findet damit in dem kürzeren Schenkel beim Vorfahren einen Anschlag, während der linke Leitstift 86 frei in Richtung auf die Tonwelle 9 vorlaufen kann (Fig. 6D). Damit schwenkt die vorgedrückte Kopfplatte 74 auf der linken Seite derartig nach vorn, daß die linke Andruckrolle 78 gegen die linke Tonwelle 9 stößt. Die andere Tonwelle bleibt unbelastet. Die Kopfplatte 74 nimmt für sehr kurze Zeit die aus Fig. 4 zu ersehende Stellung ein.

Weil der Stift 65 nicht durch den Rastmechanismus 57 verrastet ist, bewegt sich die Kopfplatte unter der Wirkung der Blattfeder 72, und die Feder 54 wandert in die Ausgangslage zurück. Ein Schalter 267 wird dann geschaltet, wodurch der Laufwerksmotor 3 abgeschaltet wird. Dieser Vorgang läuft so schnell ab, daß es der Benutzer gar nicht merkt. Dies ist notwendig, da die Bewegung der Steuerplatte 88 nach Fig. 6D zur Reverse-Abspielstellung führen würde. Es ist aber gewünscht, daß das Laufwerk beim Einschieben einer Kassette erst auf Vorlauf geschaltet wird.

Dieser Vorgang wird durch den Mikroprozessor 224 dadurch erreicht, daß jetzt der Servomotor 221 wieder startet und die Stange 62 nach rechts bewegt bis zum Reset-Schalter 225 und von dort wieder nach links läuft, bis sich der Riegelhebel 241 an den Riegelmagneten 244 angelegt hat. Da jetzt der Magnet 244 elektrisch erregt wird, bleibt der Riegelhebel 241 in dieser Stellung, so daß der Stift 65 von dem Rastmechanismus 57 gerastet werden kann. Der Spiel-Umkehr-Schalter 249 wird von dem Nocken 248 wieder geöffnet, die Stange 62 hält an, der Laufwerksmotor 3 wird erneut in Betrieb gesetzt.

Beim erneuten Inbetriebsetzen des Laufwerksmotors 3 wird die Steuerplatte 88 verschoben. Beim Nach-außen-Fahren der Kopfplatte 75 sind die Leitstifte 86, 87 in die Einlaufschlitze 110 und 111 eingelaufen. Die Steuerplatte 88 ist in ihrer alten Stellung verblieben. Die Zungen 102 und 103 liegen damit noch immer in einer nach rechts verschobenen Lage gegenüber der mittigen Lage der Einlaufschlitze 110 und 111 (Fig. 6A). Beim erneuten Start des Laufwerksmotors 3 wird das Verbindungselement 52 wieder durch das Schaltelement 46 entgegen dem Uhrzeigersinn verschwenkt und damit die Kopfplatte 74 mittels des Stiftes 71 nach vorn geschoben.

Die Steuerplatte 88 hat die aus Fig. 6A zu ersehende angenommene Stellung. Beim Vorfahren der Kopfplatte 74 in Richtung der Tonwellen 9, 10 fahren die Leitstifte 86, 87 nach vorn und laufen auf der linken Seite der Zungen 102, 103 auf und zugleich in die linken Schenkel 106 und 109 der gabelförmigen Leitschlitze 104, 105. Bei dem Einfahren der Leitstifte 86, 87 in die Schenkel 106 und 109 nehmen die Leitstifte 86, 87 die Steuerplatte 88 nach links mit, so daß sich nunmehr die Schenkel 96, 106 und 99, 109 überdecken. Der linke Leitstift 86 findet damit in dem kürzeren Schenkel beim Vorfahren einen Anschlag, während der rechte Leitstift 87 frei in Richtung auf die Tonwelle 10 vorlaufen kann (Fig. 6B). Damit schwenkt die vorgedrückte Kopfplatte 74 auf der rechten Seite derartig nach vorn, daß die rechte Andruckrolle 79 gegen die rechte Tonwelle 10 stößt. Die andere Tonwelle bleibt unbelastet. Damit läuft das Band in der aus Fig. 3 zu ersehenden Vorwärts-Spiel-Richtung.

Beim Erreichen des Bandendes bleibt das Band stehen. Dadurch wird das Schaltelement 46 mit seinem Stift 49 erneut nach außen im Uhrzeigersinn geschwenkt. Das Verbindungselement 52 wird entgegen dem Uhrzeigersinn verschwenkt (Fig. 2B) in Richtung des Pfeiles 67. Das Verbindungselement 52 wird bei diesem Bewegen über den Normalhub, der bei der eingerasteten Lage vorliegt, in einem Überhub weitergeschwenkt. Der Überhub wird möglich, da der Nocken 71 gegen die Blattfeder 72 über die Hebel 76, 77 an der Kopfplatte 74 drückt und damit Ausweichspielraum in Richtung auf die Kopfplatte hat. Bei diesem Überhub fährt der Stift 65 aus der Mulde 70 heraus, und der Rastmechanismus 57 entrastet. Unter Wirkung der Feder 54 schwenkt das entrastete Verbindungselement 52 nun im Uhrzeigersinn, so daß der Nocken 71 nach außen fährt. In dieser Lage ist die Kopfplatte nach außen zurückgefahren, und die Leitstifte 86, 87 sind wieder in die Einlaufschlitze 110 und 111 eingelaufen. Die Steuerplatte 88 ist in ihrer alten Stellung verblieben. Die Zungen 102 und 103 liegen noch immer in einer nach links verschobenen Lage gegenüber der mittigen Lage der Einlaufschlitze 110 und 111 (Fig. 6C).

Es kommt nun der automatische Reversiervorgang. Das Schaltrad 14 dreht nach wie vor weiter. Da sich die Kopfplatte 74 zurückgezogen hat, hat sie ihr umgebogenes Ende 80 auch nach außen gezogen und damit den Schwenkarm 16 derart verschwenkt, daß das Schaltrad 14 außer Eingriff ist vom Spielrad 25. Damit wird das Spielrad 25 nicht mehr angetrieben. Das Detektionsorgan 40 stellt Bandstillstand fest. Aufs Neue wird das Schaltelement 46 im Uhrzeigersinn verschwenkt. Das Schaltelement 46 drückt gegen das Verbindungselement 52 und schwenkt dieses erneut entgegen dem Uhrzeigersinn in Richtung des Pfeiles 67. Damit umfährt der Stift 65 erneut die Herzkurve 56, und der Stift fällt letztlich wieder in die Mulde 70 ein; das Verbindungselement 52 verrastet. Der Nocken 71 ist nun wieder nach vorn geschoben, und die Kopfplatte 74 nimmt nach ihrem Vorfahren die aus Fig. 4 ersichtliche Stellung ein. Das Zahnrad 17 ist über das umgebogene Ende 81 der Kopfplatte 74 mit dem Zahnrad 11 und mit dem Spielrad 24 im Eingriff. In dieser Lage nach Fig. 4 liegt die Andruckrolle 78 an der Tonwelle 9 an, und das Band wird in entgegengesetzter Richtung transportiert.

Die Umkehrung der Bandtransportrichtung ist wieder durch die Leitschlitzanordnung bewirkt worden, die in Fig. 6 in verschiedenen Stellungen dargestellt ist. Die letzte beschriebene Stellung war die Stellung nach Fig. 6C. In dieser Stellung ist die Steuerplatte 88 nach links verschoben; die Leitstifte 86, 87 liegen in den Einlaufschlitzen 110 und 111. Durch das erneute Vorfahren der Kopfplatte 74 sind die Leitstifte 86, 87 ebenfalls nach vorn gefahren und sind gegen die rechten Schrägflächen der angespitzten Zungen 102 und 103 gelaufen. Die Leitstifte 86, 87 wurden dadurch nach rechts verschoben und konnten weiter einfahren in die Schenkel 108 und 107. Die Querverschiebung der Leitstifte 86, 87 ist möglich durch das Verrutschen der Leitstifte 86, 87 in den Längsschlitzen 84, 85.

Bei dem Einfahren in die Schenkel 107 und 108 haben die Leitstifte 86, 87 die Steuerplatte 88 nach rechts mitgenommen, so daß sich nunmehr die Schenkel 108 und 98 sowie 107 und 97 überdecken. Damit haben sich die Zungen 102, 103 wieder so versetzt, daß bei ihrem erneuten Zurückfahren und Vorfahren der Leitstifte diese dann wieder auf die linken Schrägflächen der angespitzten Zungen 102 und 103 auflaufen können. Die Stellung der Leitschlitzanordnung in diesem Fall ist aus Fig. 6D zu ersehen. Der Leitstift 87 hat in den kürzeren Schenkeln 107 und 97 auf seinem Vorfahrweg einen Anschlag vorgefunden, der die Kopfplatte 74 daran hindert, auf der rechten Seite weiter vorzufahren. Auf der linken Seite hat der Leitstift 86 keinen Anschlag vorgefunden, und er konnte in den Schenkeln 108 und 98 so weit vorfahren, daß die Feder 72 die linke Seite der Kopfplatte 74 mit der Andruckrolle 78 gegen die Tonwelle 9 drücken konnte. Diese Stellung ist aus Fig. 4 zu ersehen.

Es wird bemerkt, daß ein Spurschalter 265 vorgesehen ist, der dem Mikroprozessor 224 sagt, in welcher Richtung das Band abgespielt wird. Der Spurschalter 265 wird von einer Nase 266 an der Kopfplatte 74 angestoßen in der Lage nach Fig. 3. In der anderen Lage der Kopfplatte 74 nach Fig. 4 ist er offen. Der Schalter 265 sorgt dafür, daß abhängig von der Laufrichtung die richtigen Spuren des Magnetkopfes 75 geschaltet sind.

Es ist ohne weiteres auch ein Reverse-Betrieb während des normalen Spielbetriebes per Hand zu erreichen. Dazu wird durch kurzes Antippen einer Taste 264 der Riegelmagnet 244 abgeschaltet, und der Riegelhebel 241 fällt ab unter Wirkung der Feder 54 am Verbindungselement 52. Der Stift 60 kippt damit in der Zeichnung nach Fig. 8 nach links. Der Rastmechanismus 57 wird entrastet, weil der Stift 65 aus seinem Wirkbereich herausfährt. Dadurch kann die Kopfplatte 74 ausfahren. Der Laufwerksmotor 3 bleibt nun durch Schalten des Schalters 267 stehen, bis der Servomotor 221 die Stange 62 einmal gegen den Schalter 225 und wieder zurückgefahren hat in die Spielstellung, wobei der Schalter 249 durch den Nocken 248 wieder geöffnet ist. Während dieser Bewegung hat die Kulisse 246 den Riegelhebel 241 wieder an den Riegelmagneten 244 angeklebt. Der Rastmechanismus 57 ist durch das Einfahren des Stiftes 65 wieder in Funktion gebracht worden. Die Steuerschaltung 224 setzt wieder den Laufwerksmotor 3 in Betrieb. Der Transporthebel 52 wird verschenkt und die Kopfplatte 74 eingefahren. Dabei hat sich zugleich die Bandlaufrichtung umgekehrt mit Hilfe der Steuerplatte 88 nach Fig. 5 und 6.

Zum Schnellspulen wird, abhängig von der Richtung, eine der mit der Steuerschaltung elektrisch verbundenen Schnellspul-Tiptasten 268, 269 getippt. Der Riegelmagnet 244 bleibt ausgeschaltet über die Steuerschaltung 224.

In der Spielstellung liegt der Kommandostift 257 im Startbereich eines rundgeschlossenen Leitweges 253. Es wird davon ausgegangen, daß in dem Bereich, wo auf ein Schnellspulen übergegangen werden soll, normaler Spielbetrieb in der Vorwärtsrichtung vorliegt. Drückt man nun auf die Schnellspul-Tiptaste 268, dann steuert die Steuerschaltung 224 den Servomotor 221 so an, daß die Stange 62 sich nach rechts verschiebt (Fig. 8). Der Kommandostift 257 fährt nun in eine der Kommandobahnen ein. Dabei nimmt er die Bedienungsstange 33 nach rechts mit. Gleichzeitig haben sich die Zahnräder nach Fig. 1 so verstellt, daß das Band in der Vorwärtsrichtung schnell transportiert wird. Mittels der Schrägfläche 35a, 35b wurden die Stifte 74c, 74d verschoben, was zur Folge hatte, daß die Kopfplatte 74 vom Band abgerückt ist (Fig. 1). Der Bewegungshub der Kopfplatte 74 ist aber verkürzt, so daß der Schalter 267 nicht geschaltet wird. Der schnelle Vorlauf kann beendet werden durch das Antippen der Tip-Spieltaste 264. Die Stange 62 schiebt sich wieder zurück in die Spiellage, und der Kommandostift 257 erreicht wieder den Startbereich. Eine Feder 260 schiebt die Bedienungsstange 33 nach links. Das Abspielen des Bandes erfolgt wieder in der Richtung, in der vorher abgespielt wurde.

Ist schneller Rücklauf gewünscht, dann wird auf die Schnellspul-Tiptaste 269 gedrückt. Die Steuerschaltung 224 gibt auf den Servomotor 221 ein Kommando, daß dieser die Stange 62 nach links fahren läßt. Der Kommandostift 257 ist nun gezwungen, in eine andere Kommandobahn einzulaufen, wobei er die Bedienungsstange 34 nach rechts verschiebt. Die einzelnen Bauteile in Fig. 1 haben sich nun in umgekehrter Richtung zum schnellen Rückspulen verstellt, und die Kante 36a, 36b hat wieder gegen die Stifte 74c und 74d gestoßen, womit die Kopfplatte wieder vom Band abgerückt ist. Der schnelle Rücklauf kann wieder beendet werden, indem die Spiel-Tiptaste 264 getippt wird. Dabei läuft der Kommandostift 257 bei rücklaufender Stange 62 wieder in den Leitweg 253 ein. Die Bedienungsstange 34 ist aufgrund der Vorspannung der Feder 260 dem Kommandostift 257 gefolgt und zurückgefahren in die Ausgangsstellung. Jetzt fängt wieder das Abspielen in der ursprünglichen Abspielrichtung an.

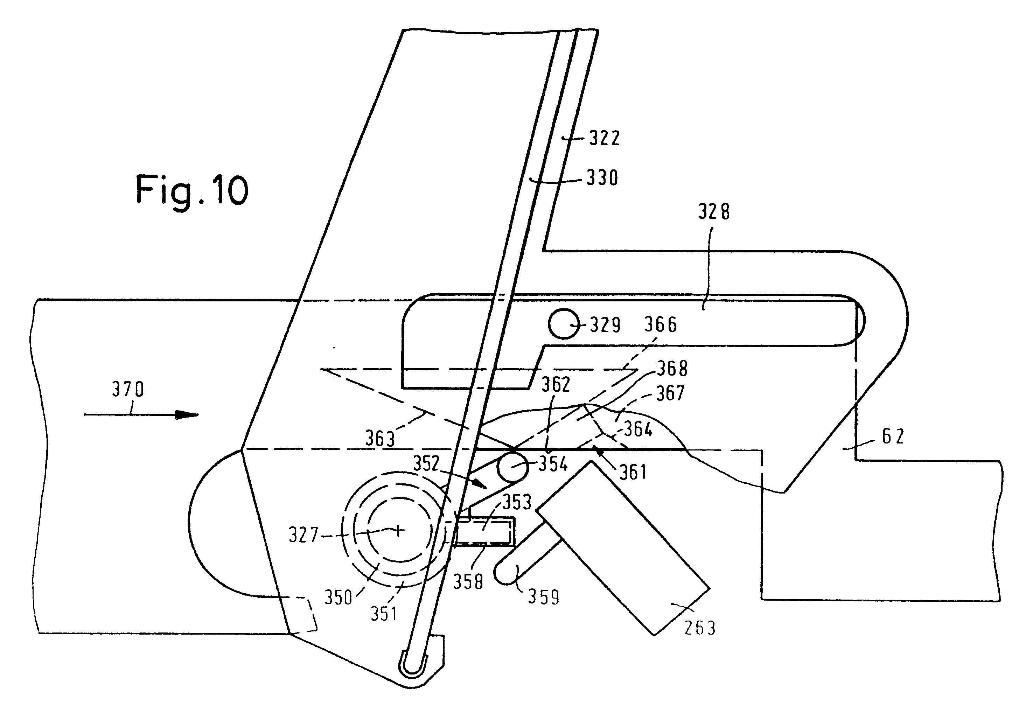

Beim Erreichen der Spielstellung hat sich die gegenseitige Lage von Steuerstange 62 und Transporthebel 322, wie in Fig. 10 dargestellt, eingestellt. Sowohl der Schaltansatz 358 als auch der Positionieransatz 353 liegen am Schaltarm 359 an. Der Tastarm 354 liegt an der Führungswand 362 an.

Beim Betätigen einer elektrischen Aufwurftaste 271 wird der Riegelmagnet 244 entregt, und der Riegelhebel 241 fällt ab. Dabei wird die Kopfplatte 74 vom Band weggeschoben; der Schalter 267 schließt sich, und der Laufwerksmotor schaltet ab. Dadurch wird gesichert, daß der Kopf vom Band abgehoben hat und weder Band noch Kopf beschädigt werden können. Der Servomotor 221 fährt die Stange 62 ganz nach links aus. Dabei fährt der Kommandostift 257 in eine dritte Kommandobahn 256 ein. Der Stift 329 fährt damit in der Kulisse 328 zurück und drückt gegen die Feder 330.

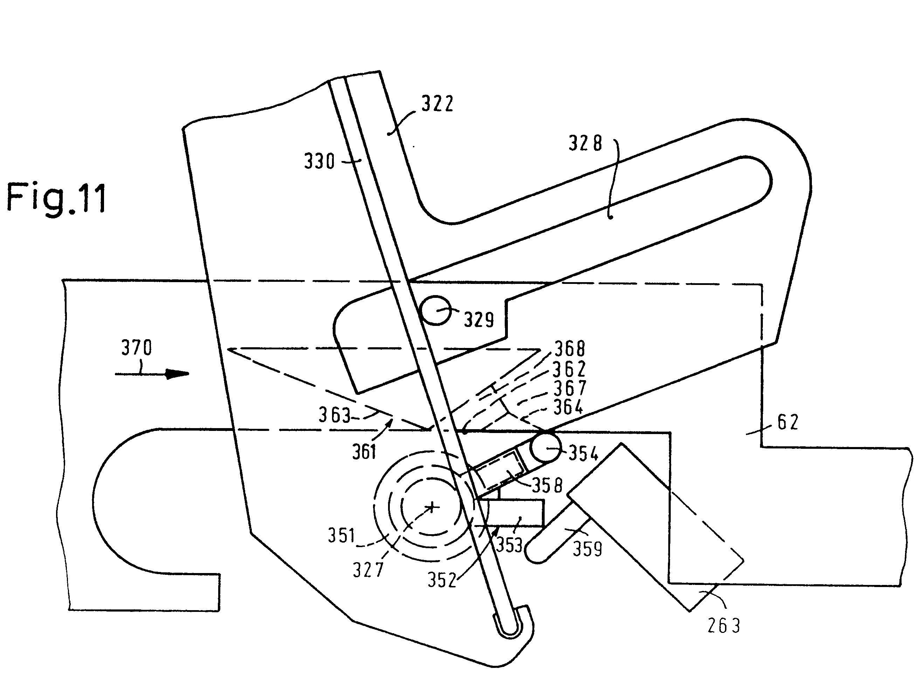

Beim Verfahren der Steuerstange 62 nach links entgegen der Richtung des Pfeiles 370 (Fig. 10) läuft der Tastarm 354 auf den vorderen Teil 363 der Führungswand 362 auf. Fig. 10 zeigt dabei die Stellung, bei der der Stift 329 die Feder 330 noch nicht erreicht hat und der Tastarm 354 gerade auf dem Übergang zwischen der schrägen Auflauffläche 363 und der Führungswand 362 liegt. Wenn sich nun die Steuerstange 62 weiter entgegen der Richtung des Pfeiles 3/0 bewegt, dann drückt der Stift 329 gegen die Feder 330, womit der Transporthebel 322 entgegen dem Uhrzeigersinn verschwenkt. Der Schaltansatz 358 bewegt sich dabei mit und verläßt den Schaltarm 359, der nunmehr nur noch mit Hilfe des Positionieransatzes 353 festgehalten wird. Bei der Stellung nach Fig. 11 liegt der Tastarm 354 unmittelbar vor dem Versatz 364. Bewegt sich die Steuerstange weiter entgegen der Richtung des Pfeiles 370, dann macht der Tastarm 354 eine Relativbewegung entlang der Führungswand 362, bis diese ihn nicht abstützt. Nun drückt der Schaltarm 359 aufgrund seiner Federkraft über den Positionieransatz 353 den Tastarm 354 in den Versatz 364, und zwar bis zu einem Einlaufbereich 367.

Der Schalter 263 hat sich damit selbst ausgeschaltet über die ihm innewohnende Federkraft. Der Servomotor 221 bleibt stehen und aufgrund der zeitlichen Verzögerung, die zwischen dem Abheben des Schaltansatzes 358 und dem Einlaufen des Tastarmes in den Versatz 364 liegt, wird dafür gesorgt, daß die Steuerstange weit genug ausgefahren ist. Durch dieses weit genug Ausfahren entgegen der Richtung des Pfeiles 370 hat der Stift 329 den Transporthebel 322 so weit entgegen dem Uhrzeigersinn geschwenkt, daß die Kassette 332 mit Sicherheit weit genug ausgeworfen wurde.

Wird erneut eine Kassette 332 eingeschoben und damit der Transporthebel 322 im Uhrzeigersinn verschwenkt, dann schaltet der Schaltansatz 358 über den Schaltarm 359 den Schalter 263 wieder ein. Das führt dazu, daß die Steuerstange 62 in Richtung des Pfeiles 370 einfährt. Dabei läuft der Tastarm 354 vom Einlaufbereich 367 die schräge Führungsbahn 368 hoch. Über das Filmgelenk 355 federt er dabei zurück, bis er nach dem Erreichen der Führungswand 362 im Bereich des Ausschnittes 369 auf die Führungswand springt. Beim weiteren Vorfahren der Steuerstange 62 in Richtung des Pfeiles 370 macht der Tastarm 354 eine Relativbewegung entlang der Kulisse 361 zur schrägen Auflauffläche 363, wo er freigegeben werden kann. Beim erneuten Zurückfahren der Steuertange wird er an der schrägen Führungsfläche wieder eingefangen.

## Ansprüche

1. Steuerungseinrichtung in einem Magnetbandkassettengerät, mit einer längsverschieblichen Steuerstange (62), die mit einem dem Einziehen bzw. Auswerfen der Kassette (332) dienenden Hebel (322) über einen Teil ihres Verschiebebeweges zusammenarbeitet, wobei dieser Hebel mittels eines Schaltansatzes (358) mit einem Schaltarm (359) eines elektrischen Schalter zusammenwirkt, der am Anfang der Einziehbewegung in eine Einschaltstellung gebracht wird und den Motorantrieb für die Steuerstange (62) einschaltet und im Verlaufe der Auswerfbewegung in einer Ausschaltstellung das Ausschalten des Motorantriebes (221, 219, 220) ermöglicht, gekennzeichnet durch ein von der Steuerstange (62) verstellbares, zeitlich begrenzt wirkendes Sperrglied (352), das im Verlauf der Auswerfbewegung der Kassette (332) von der Steuerstange (62) mittels einer Kulisse (361) in einer das Ausschalten sperrenden Stellung positioniert wird, in der es vom Schaltansatz (358) den Schaltarm (359) des Schalters (263) in der Einschaltstellung übernimmt, und erst im weiteren Verlauf gegen Ende der Auswerfbewegung von der Steuerstange (62) freigeben wird, wodurch es vom Schaltarm (359) des Schalters (263) in die Ausschaltstellung bewegbar ist, so daß der Schalter (263) den Motorantrieb bezüglich des Zeitpunktes der Freigabe des Schaltarms (359) vom Schaltansatz (358) verzögert abschaltet.

2. Steuerungseinrichtung nach Anspruch 1, dadurch gekennzeichnet, daß das zeitlich begrenzt wirkende Sperrglied (352) positioniert wird von einer Kulisse (361), die im Verlaufe der Auswerfbewegung abgetastet wird von einem Tastarm (354) des Sperrgliedes (352) und die gegen Ende der Auswerfbewegung den Tastarm (354) derart leitet, daß sich der Tastarm (354) aus der Positionierstellung in eine Freigabestellung bewegt, in der der Schaltarm (359) des Schaltorgans vom Sperrglied (352) freigegeben wird.

3. Steuerungseinrichtung nach Anspruch 2, dadurch gekennzeichnet, daß die Kulisse (361) eine Führungswand (362) aufweist, die sich im Verlaufe der Auswerfbewegung längs des Tastarmes (354) bewegt und einen zurückspringenden Versatz (364) aufweist, der gegen Ende der Auswerfbewegung am Tastarm (354) vorbeiläuft, wodurch dieser zwangsläufig in den Versatz (364) hineinläuft, wodurch die Positionierung aufgehoben wird, und daß am erneuten Anfang der Einziehbewegung der Tastarm (354) über eine Führungsbahn (368) zurückgeleitet wird zur Führungswand (362), von wo aus der Tastarm (354) die Positionierung in der den Ausschaltzeitpunkt verzögernden Stellung wieder aufnimmt.

4. Steuerungseinrichtung nach Anspruch 3, dadurch gekennzeichnet, daß der Tastarm (354) über ein Kunststoff-Filmgelenk (355) mit einer Buchse (351) verbunden ist, die einen Positionieransatz (353) aufweist, der mit dem Schaltarm (359) des Schalters (263) zusammenwirkt, und daß die Buchse (351) um einen Lagerstift (327) des Hebels (322) drehbar ist, die den Schaltansatz (358) trägt.

5. Steuerungseinrichtung nach den Ansprüchen 3 oder 4, dadurch gekennzeichnet, daß an der Buchse (351) eine Anschlagnase(356) vorgesehen ist, die mit einem an dem Chassis (1) befestigten Anschlag (357) derart zusammenwirkt, daß der Tastarm (354) beim Einlaufen in den Versatz (364) an der Führungswand (362) nur bis zum Einlaufbereich (367) der Führungsbahn (362) einlaufen kann.

6. Steuerungseinrichtung nach einem der Ansprüche 3 bis 5, dadurch gekennzeichnet, daß der Schaltarm (359) unter dem Einfluß einer auf ihn wirkenden Feder gegen das Verzögerungsglied (352) drückbar ist und der Tastarm (354) bei Aufhebung der Positionierung dementsprechend in den Versatz (354) hineindrückbar ist.

7. Steuerungseinrichtung nach Anspruch 4, dadurch gekennzeichnet, daß der Schaltansatz (358) vom Anfang der Einziehbewegung bis zur Übernahme durch den Positionieransatz den Schaltarm (359) in der Einschaltstellung hält und daß im Verlaufe der Auswerfbewegung der Positionieransatz (353) in eine überdeckende Lage mit dem Schaltansatz (358) fährt, in der der Schaltarm (359) an beiden anliegt.

8. Steuerungseinrichtung nach Anspruch 7, dadurch gekennzeichnet, daß der Transporthebel (322) mittels eines Stiftes (329) auf der Steuerstange (62) in die Auswerfstellung drehbar ist, wobei sich der Schaltansatz (358) vom Schaltarm (359) weg bewegt, und der Positionieransatz (353) mittels der Führungswand (362) in der Positionierstellung am Schaltarm (359) gehalten wird, bis der Tastarm (354) eine gewisse Zeit nach dem Wegdrehen des Schaltansatzes (358) sich in den Versatz (365) hinein bewegt, wodurch die Federkraft des Schaltarmes (359) mit dem Schaltarm (359) das Sperrglied wegdrückt und der Motorantrieb abschaltet.

## Claims

1. A control device in a magnetic-tape cassette apparatus, comprising an axially movable control rod (62) which over a part of its travel cooperates with a lever( 322) for loading and ejecting the cassette (332), which lever cooperates with a switching arm (359) of an electrical switch by means of a switching projection (358), which switch is set to an on-position at the beginning of the loading movement and starts the motor drive for the control rod (62), and to an off-position during the ejection movement to enable the motor drive (221, 219, 220) to be stopped, characterized by a blocking member (352) which is movable by the control rod (62) and which is operative for a limited time, which control rod (62), in the course of the ejection movement of the cassette (332), moves said blocking member via a guide means (361) to a position in which stopping is inhibited and in which said blocking member takes over the switching arm (359) of the switch (263) in the on-position from the switching projection (358) and is only released by the control rod (62) towards the end of the ejection movement, as a result of which it can be moved away from the switching arm (359) of the switch (263) in the off-position, so that the switch (263) stops the motor drive with a delay relative to the instant at which the switching arm (359) is released by the switching projection (358).

2. A control device as claimed in Claim 1, characterized in that the blocking member (352), which is operative for a limited time, is positioned by a guide means (361) which cooperates with a follower arm (354) of the blocking member (352) in the course of the ejection movement and which guides the follower arm (354) towards the end of the ejection movement in such a way that the follower arm (354) is moved out of the position in which positioning takes place into a release position, in which the switching arm (359) of the switch is released by the blocking member (352).

3. A control device as claimed in Claim 2, characterized in that the guide means (361) comprises a guide wall (362) which moves along the follower arm (354) in the course of the ejection movement and which comprises a re-entrant portion (364) which moves past the follower arm (354) towards the end of the ejection movement, so that this arm is forced to engage said re-entrant portion (364), causing the positioning to be discontinued, and when a new loading movement begins the follower arm (354) is returned to the guide wall (362) via a guide path (368), from where the follower arm (354) resumes the positioning movement into the position which delays the stopping instant.

4. A control device as claimed in Claim 3, characterized in that the follower arm (354) is connected to a sleeve (351) via a plastics integral hinge (355), which sleeve carries a positioning projection (353) which cooperates with the switching arm (359) of the switch (263), and the sleeve (351) is rotatable about a pivoting spindle (327) of the lever (322) which carries the switching projection (358).

5. A control device as claimed in Claim 3 or 4, characterized in that the sleeve (351) carries a stop projection (356) which cooperates with a stop (357) secured to the deck plate (1), in such a way that when the follower arm (354) engages the re-entrant portion (364) in the guide wall (362) it can only enter the guide path (362) up to the run-in area (367).

6. A control device as claimed in any one of the Claims 3 to 5, characterized in that the switching arm (359) can be urged against the blocking member (352) under the influence of a spring acting on said arm and the follower arm (354) can thus be pressed into the re-entrant portion (354) when positioning ceases.

7. A control device as claimed in Claim 4, characterized in that the switching projection (358) keeps the switching arm (359) in the on-position from the beginning of the loading movement until the takeover by the positioning projection, and in the course of the ejection movement the positioning projection (353) is moved into a position in which it is in register with the switching projection (358) and in which the switching arm (359) is positioned against both projections.

8. A control device as claimed in Claim 7, characterized in that the transport lever (322) can be pivoted into the ejection position by means of a pin (329) on the control rod (62), the switching projection (358) being moved away from the switching arm (359), and the positioning projection (353) is in the position in which it is positioned against the switching arm (359) by means of the guide wall (362) until the follower arm (354) engages the re-entrant portion (365) a certain time after the switching projection (358) has pivoted away. so that the switching arm (359) pushes the blocking member away to stop the motor drive under the influence of the spring force exerted by said switching arm (359).

## Revendications

1. Dispositif de commande dans un appareil à cassette de bande magnétique, comportant une tige de commande longitudinalement mobile (62) qui coopère, sur une partie de son trajet, avec un levier (322) servant à l'introduction et à l'éjection de la cassette (332), ce levier coopérant, au moyen d'une saillie de commutation (358) avec un bras de commutation (359) d'un commutateur électrique qui, au début du mouvement d'introduction, est amené dans une position d'enclenchement et enclenche l'entraînement motorisé pour la tige de commande (62) et, au cours du mouvement d'éjection, rend possible, dans une position de déclenchement, le déclenchement de l'entraînement motorisé (221, 219, 220), caractérisé par un élément d'arrêt (352) à action limitée dans le temps, qui peut être déplacé par la tige de commande (62) et qui, au cours du mouvement d'éjection de la cassette (332), est positionné par la tige de commande (62) au moyen d'une coulisse (361) dans une position bloquant le déclenchement, dans laquelle il reprend, par la saillie de commutation (358), le bras de commutation (359) du commutateur (263) dans la position d'enclenchement, et est libéré, plus loin, à l'approche de la fin du mouvement d'éjection de la tige de commande (62), grâce à quoi il peut être amené par le bras de commutation (359) du commutateur (263) dans la position de déclenchement, de sorte que le commutateur (263) coupe l'entraînement motorisé avec un certain retard par rapport à l'instant de la libération du bras de commutation (359) de la saillie de commutation (358).

2. Dispositif de commande suivant la revendication 1, caractérisé en ce que l'élément d'arrêt (352) à action limitée dans le temps est positionné par une coulisse (361) qui, au cours du mouvement d'éjection, est palpée par un bras de palpage (354) de l'élément d'arrêt (352) et qui, à l'approche de la fin du mouvement d'éjection, guide le bras de palpage (354) d'une manière telle que ce bras de palpage (354) passe de la position de positionnement dans une position dans laquelle le bras de commutation (359) de l'organe de commutation est libéré de l'élément d'arrêt (352).

3. Dispositif de commande suivant la revendication 2, caractérisé en ce que la coulisse (361) comporte une paroi de guidage (362) qui, au cours du mouvement d'éjection, se déplace le long du bras de palpage (354) et présente un dégagement en retrait (364) qui passe en regard du bras de palpage (354) à l'approche de la fin du mouvement d'éjection, grâce à quoi ce bras pénètre inévitablement dans le dégagement (364), ce qui supprime le positionnement et que, lors d'un nouveau début du mouvement d'introduction, le bras de palpage (354) est ramené par l'intermédiaire d'un chemin de guidage (368) vers la paroi de guidage (362) à partir de laquelle le bras de palpage (354) reprend le positionnement dans la position de retardement de l'instant de déclenchement.

4. Dispositif de commande suivant la revendication 3, caractérisé en ce que le bras de palpage (354) est relié, par une charnière pelliculaire en matière plastique (355), à une douille (351) qui présente une saillie de positionnement (353) coopérant avec le bras de commutation (359) du commutateur (263), et que la douille (351) peut tourner autour d'un pivot (327) du levier (322) qui porte la saillie de commutation (358).

5. Dispositif de commande suivant la revendication 3 ou 4, caractérisé en ce que, sur la douille (351), est prévu un bec de butée (356) qui coopère avec une butée (357) fixée au châssis d'une manière telle que le bras de palpage (354), lors de son entrée dans le dégagement (364) au niveau de la paroi de guidage (362), ne puisse pénétrer que jusque dans la zone d'entrée (367) de la paroi de guidage (362).

6. Dispositif de commande suivant l'une quelconque des revendications 3 à 5, caractérisé en ce que le bras de commutation (359) peut être pressé contre l'élément à retard (352) sous l'effet d'un ressort qui y est associé et le bras de palpage (354), lors de la suppression du positionnement, peut être pressé de manière correspondante dans le dégagement (354).

7. Dispositif de commande suivant la revendication 4, caractérisé en ce que la saillie de commutation (358) maintient le bras de commutation (359) dans la position d'enclenchement depuis le début du mouvement d'introduction jusqu'à sa reprise par la saillie de positionnement et qu'au cours du mouvement d'éjection, la saillie de positionnement (353) vienne occuper une position de superposition par rapport à la saillie de commutation (358), dans laquelle le bras de commutation (359) est appliqué contre les deux saillies.

8. Dispositif de commande suivant la revendication 7, caractérisé en ce que le levier de transport (322) peut pivoter dans la position d'éjection à l'intervention d'un doigt (329) prévu sur la tige de commande (62) de sorte que la saillie de commutation (358) s'écarte du bras de commutation (359) et la saillie de positionnement (353) est maintenue, au moyen de la paroi de guidage (362), dans la position de positionnement, contre le bras de commutation (359), jusqu'à ce que le bras de palpage (354), un certain temps après que la saillie de commutation (358) se soit écartée par pivotement, s'engage dans le dégagement (364), grâce à quoi la force du ressort du bras de commutation (359) écarte l'élément d'arrêt à l'aide du bras de commutation (359) et coupe l'entraînement motorisé.

FIG.1

FIG. 2 A

Fig.2B

FIG.3

FIG.4

FIG.5

EP 0 181 674 B1

FIG.6

Fig.7

FIG.8

Fig.9

Fig.10

Fig.11

Fig.12